# EUROPEAN PATENT SPECIFICATION

(11) **EP 2 834 293 B1**
(45) Date of publication and mention of the grant of the patent: **21.11.2018**
(21) Application number: 13772465.4
(22) Date of filing: 01.03.2013
(51) Int. Cl.: C08J 11/04, C08K 5/05, C08K 5/42, A61K 48/00, B29B 17/02

(54) **ADDITIVE FOR USE IN WASH STEP OF PET RECYCLING PROCESS**
ADDITIV ZUR VERWENDUNG IN EINEM WASCHSCHRITT EINES PET-RECYCLINGVERFAHRENS
ADDITIF À UTILISER DANS L'ÉTAPE DE LAVAGE DE PROCESSUS DE RECYCLAGE DE POLYÉTHYLÈNE TÉRÉPHTALATE

(30) Priority: 03.04.2012 US 201213438149
(43) Date of publication of application: 11.02.2015
(73) Proprietor: MacDermid Acumen, Inc., Waterbury, CT 06702 (US)
(72) Inventor: BACCHIOCCHI, Luigi, 28100 Novara (NO) (IT); POZZI, Gianluca, 20010 Vittuone (MI) (IT)
(74) Representative: Jenkins, Peter David
(86) International application number: PCT/US2013/028551
(87) International publication number: WO 2013/151640

(56) References cited:
- WO-A1-02/08324
- WO-A1-98/59027
- US-A- 4 073 661
- US-A- 4 368 274
- US-A- 5 628 832
- US-A- 5 786 319
- US-A- 5 929 024
- US-A- 5 929 024
- US-A1- 2006 172 912
- US-A1- 2006 172 912

## Description

### FIELD OF THE INVENTION

The present invention relates generally to a wash solution usable in a polyethylene terephthalate (PET) recycling process.

### BACKGROUND OF THE INVENTION

Polyethylene terephthalate (PET) is a widely used resin with a broad range of applications, including widespread use in beverage containers and bottles. The widespread use and acceptance of PET is due in part to its ability to be used for food contact as well as its light weight relative to glass of comparable strength and its ability to resist breakage.

Over recent years, environmental pressures have increased along with a demand for the recycling of many materials, including PET plastics. Many of the applications for recycled PET are for relatively low specification products that use a mixture of thermoplastic resins or polymers (including PET). In these applications, removal of contaminants is not important. However, if PET containers are recycled to produce PET resins, it is desirable that the PET resin be suitable for the same applications as virgin PET. In addition, it is often desirable that the recycled resin be usable for food contact applications, and, as such, there are strict limits on the presence of contaminants.

Furthermore, a common source of recyclable material is post consumer curbside waste, and PET plastics originating from sorted collections of solid waste can be contaminated with a range of materials including other polymers, such as polyolefins, high density polyethylene (HDPE), metals, and particulate materials, adhesives, paper, inks and remnants of materials stored in the containers.

Various processes have been proposed over the years for recycling PET plastics, as described for example, in U.S. Pat. No. 5,203,359 to Fesmire et al., U.S. Pat. No. 4,033,907 to Wolf, and in International Pub. No. WO 01/21373 to Visy Plastics Pty LTD, the subject matter of each of which is herein incorporated by reference in its entirety.

Generally, recycling/reclamation processes for PET plastics include steps of grinding the waste materials to reduce bulk, segregating the various types of materials from each other before or after grinding, followed by washing prior to recycling for refabrication or, alternatively pyrolyzing for monomer recover or incinerating for energy recovery.

A typical PET recycling process generally comprises at least the following steps:
(1) Sorting;
(2) Granulation/shredding;
(3) Washing; and
(4) Drying.

(1) Sorting - scrap may come into the recycling facility as a mixture of materials including, for example, PET bottles, including clear, green, blue and some other colors, clear PVC bottles, HDPE bottles, glass bottles, aluminum cans and even stray polystyrenes trays or cups. However, the material that is subjected to the granulation step must be only PET, so the sorting step is critical. In addition, if PET bottles are received from curbside recycling, "other plastics" contamination is common and therefore must be sorted out.

The configuration and dimensions of the sorting apparatus will vary according to production rate, set up of the building, handling of garbage and other factors. Sorting methods that are widely used in PET bottle recycling systems include negative and positive sorting methods. The common meaning for "negative" is to separate out the materials that are recognized to be something different than PET. The common meaning for "positive" is to separate out the PET bottles themselves. For high capacity systems, a fully automatic "near infrared" (NIR) sorting machine may be used.

At this point, the bottles (or other containers) are separated, by type of plastic and color, and are at least substantially metals and foreign objects free. The now separated PET bottles are then ready for the granulation step.
(2) Granulation - the granulation step involves downsizing the PET bottles or containers by granulating or shredding to flakes of a desired size. Both wet and dry granulators may be used, alone or in combination.

During the cutting action, the granulator removes, by friction, at least portions of the labels sticking to the surface of the PET flakes. It is also common for the PET flakes to go through a device to separate the labels from the heavier PET flakes. Thus, after the PET material is separated from other such plastics, metals, and paper (including labels), the granulated PET material is ready for the washing step.
(3) Washing - in the washing step, the PET flakes are typically subjected to a pre-washing step in which a horizontal centrifuge or other similar type device, working with water in the first part and a dryer in the second part, is used to at least substantially remove paper and surface dirt from the PET flakes.

In addition, the granulated PET flakes may also be subjected to a sink-float tank with agitation (or another similar device known in the art) to remove floatable materials such as low density polyethylene (LDPE) and polypropylene (PP) labels from the PET flakes.

After the optional (but preferable) steps of pre-washing and separation from olefins, the PET flakes are washed using a caustic solution, such as sodium hydroxide, alone or in combination with a detergent, at an elevated temperature. During the wash step, the PET flakes are contacted with the hot caustic solution at a temperature of from about 54° to 93°C (130° to 200°F) for a predetermined time period. This hot caustic wash destroys mold growth and bacteria, which could result in a failure of the recycled material to meet Public Health standards, and dissolves metallic contaminants, such as aluminum caps and label foil, which may have been carried over from the sorting step.

After washing, the PET flakes are thoroughly rinsed to remove all of the caustic solution. Finally, the PET flakes are dried.

If the PET flakes are designated for food applications, additional steps may be required to meet standards for contamination and to adjust the pH to about 7.

### SUMMARY OF THE INVENTION

It is an object of the present invention to control foam during the washing step of a PET recycling process.

It is another object of the present invention to provide an improved means of sludge separation during the washing step of a PET recycling process.

It is still another object of the present invention to provide an improved additive for use in the wash step of a PET recycling process.

To that end, the present invention provides a wash solution for recycled polyethylene terephthalate according to claim 1.

The present invention also provides a process for recycling scrap polyethylene terephthalate according to claim 8.

### DETAILED DESCRIPTION OF THE PREFERRED EMBODIMENTS

The inventors of the present invention have found that the use of an additive in the caustic washing solution provides good results in terms of foam control and sludge separation. The use of this additive in the caustic washing solution helps to control the foam that results from saponification between caustics and organic pollution from bottles and to separate the sludges that may form.

In one embodiment, the present invention relates generally to an additive for use in a wash step of a PET recycling process, the additive comprising:
a) at least one non-ionic surfactant;
b) at least one cationic surfactant;
c) a hydrotrope;
d) water; and
e) optionally, an organic solvent.

While various organic solvents are usable in the practice of the present invention, the solvent is preferably a glycol ether. Suitable glycol ethers include, but are not limited to, ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether, ethylene glycol dimethyl ether, ethylene glycol diethyl ether, ethylene glycol dibutyl ether, and combinations of one or more of the foregoing. In a preferred embodiment, the glycol ether comprises diethylene glycol mono-n-butyl ether (also known as butyl diglycol).

The concentration of the solvent in the additive is typically in the range of about 2-8% by weight, more preferably in the range of about 3-6% by weight and most preferably in the range of about 3-4% by weight, based on the total weight of the additive.

Useful non-ionic surfactants include the condensation products of aliphatic alcohols with from about 1 to about 60 moles of ethylene oxide. The alkyl chain of the aliphatic alcohol can either be straight or branched, primary or secondary, and generally contains from about 8 to about 22 carbon atoms. Examples of such ethoxylated alcohols include the condensation product of myristyl alcohol condensed with about 10 moles of ethylene oxide per mole of alcohol and the condensation product of about 9 moles of ethylene oxide with coconut alcohol (a mixture of fatty alcohols with alkyl chains varying in length from about 10 to 14 carbon atoms). Other examples are those C₆-C₁₁ straight-chain alcohols which are ethoxylated with from about 3 to about 6 moles of ethylene oxide. Their derivation is well known in the art. One example of an ethoxylated fatty alcohol that is usable in the additive described herein is available from Sasol Company under the tradename, BIODAC® 610.

Further useful nonionic surfactants include alcohol ethoxylates and alcohol alkoxylates. Other examples of useful nonionic surfactants include those having a formula RO(CH₂CH₂O)ₙH wherein R is a mixture of linear, even carbon-number hydrocarbon chains ranging from C₁₂H₂₅ to C₁₆H₃₃ and n represents the number of repeating units and is a number of from about 1 to about 12.

Another class of useful nonionic surfactants include are monobranched alkoxylated C10-fatty alcohols and/or C11-fatty alcohols; these are jointly referred to as C10/C11-fatty alcohols. While the foregoing materials are ethoxylated, it is to be understood that other alkoxylated, e.g., propoxylated, butoxylated, as well as mixed ethoxylated and propoxylated branched nonionic alkyl polyethylene glycol ether may also be used. One suitable ethoxylated/propoxylated fatty alcohol is available from Sasol Company under the tradename BIODAC® 2-32, which has been demonstrated to have good alkaline stability and is a low-foam surfactant.

Suitable non-ionic surfactants also include alcohol ethoxylate and alcohol alkoxylate surfactants. Suitable alkoxylated surfactants include EO/PO copolymers, capped EO/PO copolymers, alcohol alkoxylates, capped alcohol alkoxylates, mixtures thereof, or the like, such as MARLOX® OP1 (R-(EO)6(PO)4) and Dehypon LS-36 (R-(EO)3(PO)6); and capped alcohol alkoxylates, such as Plurafac LF231 and Tegoten EC11; mixtures thereof, or the like.

The concentration of the at least one non-ionic surfactant in the additive is typically in the range of about 45-65% by weight, more preferably in the range of about 50-60% by weight and most preferably in the range of about 53-58% by weight, based on the total weight of the additive. In an especially preferred embodiment, at least two non-ionic surfactants are used - an ethoxylated fatty alcohol in an amount of about 45-55% by weight, more preferably about 50% by weight and an ethoxylated/propoxylated fatty alcohol in an amount of about 4-10% by weight, more preferably about 5% by weight.

The at least one cationic surfactant usable in the additive described herein is preferably a quaternary ammonium compound. These quaternary ammonium compounds may also act as germicides. Especially preferred are quaternary ammonium compounds and salts thereof, which may be characterized by the general structural formula: 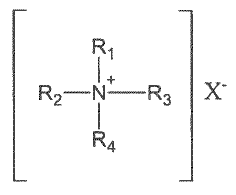 where at least one of R₁, R₂, R₃ and R₄ is a alkyl, aryl or alkylaryl substituent of from 6 to 26 carbon atoms, and the entire cation portion of the molecule has a molecular weight of at least 165. The alkyl substituents may be long-chain alkyl, long-chain alkoxyaryl, long-chain alkylaryl, halogen-substituted long-chain alkylaryl, long-chain alkylphenoxyalkyl, arylalkyl, etc. The remaining substituents on the nitrogen atoms other than the abovementioned alkyl substituents are hydrocarbons usually containing no more than 12 carbon atoms. The substituents R₁, R₂, R₃ and R₄ may be straight-chained or may be branched, but are preferably straight-chained, and may include one or more amide, ether or ester linkages. The counterion X may be any salt-forming anion which permits water solubility of the quaternary ammonium complex.

Exemplary quaternary ammonium salts within the above description include the alkyl ammonium halides such as cetyl trimethyl ammonium bromide, alkyl aryl ammonium halides such as octadecyl dimethyl benzyl ammonium bromide, N-alkyl pyridinium halides such as N-cetyl pyridinium bromide, and the like. Other suitable types of quaternary ammonium salts include those in which the molecule contains either amide, ether or ester linkages such as octyl phenoxy ethoxy ethyl dimethyl benzyl ammonium chloride, N-(laurylcocoaminoformylmethyl)-pyridinium chloride, and the like. Other very effective types of quaternary ammonium compounds which are useful as germicides include those in which the hydrophobic radical is characterized by a substituted aromatic nucleus as in the case of lauryloxyphenyltrimethyl ammonium chloride, cetylaminophenyltrimethyl ammonium methosulfate, dodecylphenyltrimethyl ammonium methosulfate, dodecylbenzyltrimethyl ammonium chloride, chlorinated dodecylbenzyltrimethyl ammonium chloride.

Preferred quaternary ammonium compounds which act as germicides and which have been found to be useful in the practice of the present invention include those which have the structural formula: 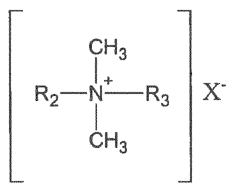 wherein R₂ and R₃ are the same or different C₈-C₁₂ alkyl, or R₂ is C₁₂₋₁₆ alkyl, C₈₋₁₈ alkylethoxy, C₈₋₁₈ alkylphenolethoxy and R₃ is benzyl, and X is a halide, for example chloride, bromide or iodide, or is a methosulfate anion. The alkyl groups recited in R₂ and R₃ may be straight-chained or branched, but are preferably substantially linear.

Particularly useful quaternary germicides include compositions which include a single quaternary compound, as well as mixtures of two or more different quaternary compounds. Such useful quaternary compounds are available under the BARDAC®, BARQUAT®, HYAMINE®, LONZABAC®, BTC® and ONYXIDE® trademarks, which are more fully described in the respective product literature from the suppliers identified below. For example, BARDAC® 205M is described to be a liquid containing alkyl dimethyl benzyl ammonium chloride, octyl decyl dimethyl ammonium chloride; didecyl dimethyl ammonium chloride, and dioctyl dimethyl ammonium chloride (50% active) (also available as 80% active (BARDAC® 208M)); BARDAC® 2050 is described to be a combination of octyl decyl dimethyl ammonium chloride/didecyl dimethyl ammonium chloride, and dioctyl dimethyl ammonium chloride (50% active) (also available as 80% active (BARDAC® 2080)); BARDAC® 2250 is described to be didecyl dimethyl ammonium chloride (50% active); BARDAC® LF (or BARDAC® LF-80), described as being based on dioctyl dimethyl ammonium chloride (BARQUAT® MB-50, MX-50, OJ-50 (each 50% liquid) and BARDAC® MB-80 or MX-80 (each 80% liquid) are each described as an alkyl dimethyl benzyl ammonium chloride; BARDAC® 4250 and BARQUAT® 4250Z (each 50% active) or BARQUAT® 4280 and BARQUAT® 4280Z (each 80% active) are each described as alkyl dimethyl benzyl ammonium chloride/alkyl dimethyl ethyl benzyl ammonium chloride. Also, HYAMINE® 1622, described as diisobutyl phenoxy ethoxy ethyl dimethyl benzyl ammonium chloride (50% solution); HYAMINE® 3500 (50% actives), described as alkyl dimethyl benzyl ammonium chloride (also available as 80% active (HYAMINE® 3500-80)); and HYMAINE® 2389 described as being based on methyldodecylbenzyl ammonium chloride and/or methyldodecylxylene-bis-trimethyl ammonium chloride. (BARDAC®, BARQUAT® and HYAMINE® are presently commercially available from Lonza, Inc., Fairlawn, NJ). BTC® 50 NF (or BTC® 65 NF) is described to be alkyl dimethyl benzyl ammonium chloride (50% active); BTC® 99 is described as didecyl dimethyl ammonium chloride (50% active); BTC® 776 is described to be myrisalkonium chloride (50% active); BTC® 818 is described as being octyl decyl dimethyl ammonium chloride, didecyl dimethyl ammonium chloride, and dioctyl dimethyl ammonium chloride (50% active) (available also as 80% active (BTC® 818-80%)); BTC® 824 and BTC® 835 are each described as being of alkyl dimethyl benzyl ammonium chloride (each 50% active); BTC® 885 is described as a combination of BTC® 835 and BTC® 818 (50% active) (available also as 80% active (BTC® 888)); BTC® 1010 is described as didecyl dimethyl ammonium chloride (50% active) (also available as 80% active (BTC® 1010-80)); BTC® 2125 (or BTC® 2125 M) is described as alkyl dimethyl benzyl ammonium chloride and alkyl dimethyl ethylbenzyl ammonium chloride (each 50% active) (also available as 80% active (BTC® 2125 80 or BTC® 2125 M)); BTC® 2565 is described as alkyl dimethyl benzyl ammonium chlorides (50% active) (also available as 80% active (BTC® 2568)); BTC® 8248 (or BTC® 8358) is described as alkyl dimethyl benzyl ammonium chloride (80% active) (also available as 90% active (BTC® 8249)); ONYXIDE® 3300 is described as n-alkyl dimethyl benzyl ammonium saccharinate (95% active). (BTC® and ONYXIDE® are presently commercially available from Stepan Company, Northfield, Ill.) Polymeric quaternary ammonium salts based on these monomeric structures are also considered desirable for the present invention. One example is POLYQUAT®, described as being a 2-butenyldimethyl ammonium chloride polymer. One especially preferred quaternary ammonium compound comprises N,N Dimethyl 2-hydroxypropylamnouium chloride available under the tradename ROQUAT® JL.

The concentration of the quaternary ammonium compound in the additive is typically in the range of about 2-10% by weight, more preferably in the range of about 4-8% by weight and most preferably in the range of about 5% by weight, based on the total weight of the additive.

The additive described herein also comprises a hydrotrope to maintain product stability or homogeneity over wide temperature ranges. As used herein the terms "hydrotrope" and "hydrotropic compound" refer to benzene sulfonates, naphthalene sulfonates, short chain (C₁₋₁₁) alkyl benzene sulfonates, medium chain (C₆₋₁₁) alkyl sulfonates, medium chain (C₆₋₁₁) alkyl sulfates, alkylpolyglucosides, medium chain (C₆-C₁₀) alkyl dimethyl amine oxides, alkyl diphenyloxide disulfonates, phosphate ester hydrotropes, and medium chain (C₆₋₁₁) alkyl ether (up to 10 moles of ethylene oxide) sulfates. The cations of the hydrotropic compounds of the invention include alkali metal, ammonium, and triethanolammonium cations. Thus, these terms include short-chain water-soluble surfactants which comprise a hydrophilic substituent and one or more hydrophobic hydrocarbyl substituents wherein the maximum chain length of any of said hydrocarbyl substituents is about C₁₁.

Short chain (C₁₋₄) alkyl benzene sulfonates include, for example, isopropylbenzene sulfonates, xylene sulfonates, toluene sulfonates, cumene sulfonates, and mixtures thereof. Representative, non-limiting examples of medium chain (C₆₋₈) alkyl sulfonates are hexyl sulfonates, octyl sulfonates, and hexyl/octyl sulfonates, and mixtures thereof. Other hydrotropes are naphthalene sulfonates.

The terms "hydrotrope" and "hydrotropic compound" also refer to alkylpolysaccharides such as alkylpolyglycosides, polymeric hydrotropes, C₈₋₁₀ amine oxides, alkyldiphenyloxide disulfonates, and phosphate esters such as isopropanol alkyl phosphate esters, and the like.

Preferred hydrotropes for use in the invention are xylene sulfonates, cumene sulfonates, alkyl sulfonates having from an average of about 6-8 carbon atoms in the alkyl portion, and alkylpolyglycosides having an average of about 10 carbon atoms in the alkyl portion. One particularly preferred hydrotrope is sodium cumen sulfonate.

The concentration of the hydrotrope in the additive is typically in the range of about 2-10% by weight, more preferably in the range of about 4-8% by weight and most preferably in the range of about 5% by weight, based on the total weight of the additive.

Finally, the balance of additive comprises water. In a preferred embodiment, deionized water is used at a concentration of between about 25 to about 40% by weight, more preferably between about 30-35% by weight.

In another embodiment, the present invention also relates generally to a process for recycling scrap polyethylene terephthlate, the process including the steps of sorting the scrap polyethylene terephthalate to remove other materials, granulating or shredding the scrap polyethylene terephthalate to produce polyethylene terephthalate flakes, and washing the polyethylene terephthalate flakes to remove contaminants, wherein the wash step comprises the steps of:
contacting the polyethylene terephthalate flakes with a wash solution comprising:
   a) an alkali hydroxide; and
   b) an additive comprising:
      i) at least one non-ionic surfactant;
      ii) at least one cationic surfactant;
      iii) a hydrotrope;
      iv) water; and
      v) optionally, an organic solvent; and thereafter
rinsing and drying the polyethylene terephthalate flakes.

In a preferred embodiment, the alkali hydroxide comprises sodium hydroxide. The alkali hydroxide is preferably used in the wash solution at a concentration of about 0.5 to about 2.0% by weight of the alkali hydroxide.

The wash solution also comprises about 1 to about 3 grams/liter of the additive.

In addition, it is desirable that the wash step is conducted at an elevated temperature. In a preferred embodiment, the wash step is conducted at a temperature of between about 60 to about 90°C.

### Example 1:

A composition in accordance with the invention was prepared comprising:

| **Ingredient** | **Composition** | **% by Wt.** |
|---|---|---|
| Deionized water | | 32 |
| Butyl diglycol | | 3 |
| BIODAC® 610 | Ethoxylated fatty alcohol | 50 |
| Sodium cumen sulfonate (40%) | | 5 |
| GENAPOL® E280 | Ethoxylated fatty alcohol | 5 |
| ROQUAT® JL | ammonium quaternary salt | 5 |

This additive was used added to a caustic (NaOH) in the wash step under the following conditions:

| | |
|---|---|
| Temperature: | 60-90 °C |
| NaOH (30%) | 0.5 to 2% |
| Additive | 1-3 g/l. |

The use of this additive in the caustic washing solution was shown to provide good results in terms of both foam control and sludge separation.

It is also to be understood that the following claims are intended to cover all of the generic and specific features of the invention described herein and all statements of the scope of the invention which as a matter of language might fall therebetween.

## Claims

1. A wash solution for recycled polyethylene terephthalate, the wash solution comprising:
a) sodium hydroxide; and
b) an effective amount of an additive comprising:
a) at least one non-ionic surfactant;
b) at least one cationic surfactant;
c) a hydrotrope;
d) balance, water; and
e) optionally, an organic solvent
wherein the at least one cationic surfactant comprises a cationic surfactant which has the structural formula: 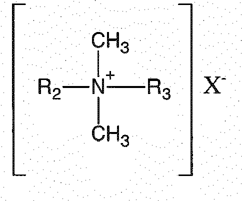 wherein R₂ and R₃ are the same or different C₈-C₁₂ alkyl, or R₂ is C₁₂₋₁₆ alkyl, C₈₋₁₈ alkylethoxy, C₈₋₁₈ alkylphenolethoxy and R₃ is benzyl, and X is a halide or is a methosulfate anion.

2. The wash solution according to claim 1, wherein the additive comprises an organic solvent selected from the group consisting of ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether, ethylene glycol dimethyl ether, ethylene glycol diethyl ether, ethylene glycol dibutyl ether, and combinations of one or more of the foregoing, optionally wherein the organic solvent comprises diethylene glycol mono-n-butyl ether.

3. The wash solution according to claim 1, wherein the at least one non-ionic surfactant comprises an alcohol ethoxylate or an alcohol alkoxylate.

4. The wash solution according to claim 1, wherein the concentration of the at least one non-ionic surfactant in the additive is in the range of 45 to 65% by weight, based on the total weight of the additive.

5. The wash solution according to claim 1, wherein the at least one non-ionic surfactant comprises an ethoxylated fatty alcohol and an ethoxylated/propoxylated fatty alcohol, optionally wherein the additive comprises the ethoxylated fatty alcohol in an amount of 45-55% by weight and the ethoxylated/propoxylated fatty alcohol in an amount of 4-10% by weight, based on the total weight of the additive.

6. The wash solution according to claim 1, wherein the at least one cationic surfactant comprises dioctyl dimethyl ammonium chloride.

7. The wash solution according to claim 1, wherein the hydrotrope is selected from the group consisting of benzene sulfonates, naphthalene sulfonates, short chain (C₁₋₁₁) alkyl benzene sulfonates, medium chain (C₆₋₁₁) alkyl sulfonates, medium chain (C₆₋₁₁) alkyl sulfates, alkylpolyglucosides, medium chain (C₆-C₁₀) alkyl dimethyl amine oxides, alkyl diphenyloxide disulfonates, phosphate ester hydrotropes, medium chain (C₆₋₁₁) alkyl ether sulfates and combinations of one or more of the foregoing, optionally wherein the hydrotrope comprises sodium cumen sulfonate

8. A process for recycling scrap polyethylene terephthlate, the process including the steps of sorting the scrap polyethylene terephthalate to remove other materials, granulating or shredding the scrap polyethylene terephthalate to produce polyethylene terephthalate flakes, and washing the polyethylene terephthalate flakes to remove contaminants, wherein the wash step comprises the steps of:
contacting the polyethylene terephthalate flakes with a wash solution comprising:
a) an alkali hydroxide; and
b) an effective amount of additive comprising:
i) at least one non-ionic surfactant;
ii) at least one cationic surfactant;
iii) a hydrotrope;
iv) balance, water; and
v) optionally an organic solvent;
wherein the at least one cationic surfactant comprises a cationic surfactant which has the structural formula: 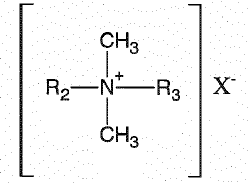 wherein R₂ and R₃ are the same or different C₈-C₁₂ alkyl, or R₂ is C₁₂₋₁₆ alkyl, C₈₋₁₈ alkylethoxy, C₈₋₁₈ alkylphenolethoxy and R₃ is benzyl, and X is a halide or is a methosulfate anion
and thereafter
rinsing and drying the polyethylene terephthalate flakes.

9. The process according to claim 8, wherein the alkali hydroxide comprises sodium hydroxide.

10. The process according to claim 8, wherein the wash solution comprises 0.5 to 2.0% by weight of the alkali hydroxide.

11. The process according to claim 8, wherein the wash solution comprises 1 to 3 grams/liter of the additive.

12. The process according to claim 8, wherein the wash step is conducted at a temperature of between 60 to 90°C.

13. The process according to claim 8, wherein the additive comprises an organic solvent selected from the group consisting of ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether, ethylene glycol dimethyl ether, ethylene glycol diethyl ether, ethylene glycol dibutyl ether, and combinations of one or more of the foregoing, optionally wherein the organic solvent comprises diethylene glycol mono-n-butyl ether.

14. The process according to claim 8, wherein the at least one cationic surfactant comprises dioctyl dimethyl ammonium chloride.

## Patentansprüche

1. Waschlösung für recyceltes Polyethylenterephthalat, wobei die Waschlösung Folgendes umfasst:
a) Natriumhydroxid; und
b) eine wirksame Menge eines Additivs, das Folgendes umfasst:
a) wenigstens ein nichtionisches Tensid;
b) wenigstens ein kationisches Tensid;
c) ein Hydrotrop;
d) der Rest Wasser; und
e) optional ein organisches Lösungsmittel,
wobei das wenigstens eine kationische Tensid ein kationisches Tensid der folgenden Strukturformel umfasst: 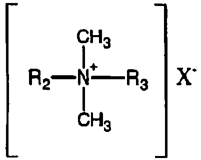 wobei R₂ und R₃ gleich oder unterschiedlich C₈-C₁₂ Alkyl sind oder R₂ C₁₂₋₁₆ Alkyl, C₈₋₁₈ Alkylethoxy, C₈₋₁₈ Alkylphenolethoxy ist und R₃ Benzyl ist und X ein Halogenid oder ein Methosulfatanion ist.

2. Waschlösung nach Anspruch 1, wobei das Additiv ein organisches Lösungsmittel umfasst, ausgewählt aus der Gruppe bestehend aus Ethylenglykolmonomethylether, Ethylenglykolmonoethylether, Ethylenglykolmonopropylether, Ethylenglykolmonoisopropylether, Ethylenglykolmonobutylether, Ethylenglykolmonophenylether, Ethylenglykolmonobenzylether, Diethylenglykolmonomethylether, Diethylenglykolmonoethylether, Diethylenglykol-mono-n-butylether, Ethylenglykoldimethylether, Ethylenglykoldiethylether, Ethylenglykoldibutylether und Kombination von einem oder mehreren der Obigen, wobei das organische Lösungsmittel optional Diethylenglykol-mono-n-butylether umfasst.

3. Waschlösung nach Anspruch 1, wobei das wenigstens eine nichtionische Tensid ein Alkoholethoxylat oder ein Alkoholalkoxylat umfasst.

4. Waschlösung nach Anspruch 1, wobei die Konzentration des wenigstens einen nichtionischen Tensids in dem Additiv im Bereich von 45 bis 65 Gew.-% auf der Basis des Gesamtgewichts des Additivs liegt.

5. Waschlösung nach Anspruch 1, wobei das wenigstens eine nichtionische Tensid einen ethoxylierten Fettalkohol und einen ethoxylierten/propoxylierten Fettalkohol umfasst, wobei das Additiv optional den ethoxylierten Fettalkohol in einer Menge von 45-55 Gew.-% umfasst und der ethoxylierte/propoxylierte Fettalkohol in einer Menge von 4-10 Gew.-% auf der Basis des Gesamtgewichts des Additivs umfasst.

6. Waschlösung nach Anspruch 1, wobei das wenigstens eine kationische Tensid Dioctyldimethylammoniumchlorid umfasst.

7. Waschlösung nach Anspruch 1, wobei das Hydrotrop ausgewählt ist aus der Gruppe bestehend aus Benzolsulfonaten, Naphthalensulfonaten, Kurzketten-(C₁₋₁₁)-Alkylbenzolsulfonaten, Mittelketten-(C₆₋₁₁)-Alkylsulfonaten, Mittelketten-(C₆₋₁₁)-Alkylsulfaten, Alkylpolyglucosiden, Mittelketten-(C₆-C₁₀)-Alkyldimethylaminoxiden, Alkyldiphenyloxiddisulfonaten, Phosphatesterhydrotropen, Mittelketten-(C₆₋₁₁)-Alkylethersulfaten und Kombinationen von einem oder mehreren der Obigen, wobei das Hydrotrop optional Natriumcumensulfonat umfasst.

8. Verfahren zum Recyceln von Abfallpolyethylenterephthalat, wobei das Verfahren die Schritte des Sortierens des Abfallpolyethylenterephthalats zum Entfernen von anderen Materialien, des Granulierens oder Zerkleinerns des Abfallpolyethylenterephthalats zum Produzieren von Polyethylenterephthalatflocken und des Waschens der Polyethylenterephthalatflocken zum Entfernen von Kontaminanten beinhaltet, wobei der Waschschritt die folgenden Schritte beinhaltet:
Inkontaktbringen der Polyethylenterephthalatflocken mit einer Waschlösung, das Folgendes beinhaltet:
a) ein Alkalihydroxid; und
b) eine wirksame Menge Additiv, das Folgendes umfasst:
i) wenigstens ein nichtionisches Tensid;
ii) wenigstens ein kationisches Tensid;
iii) ein Hydrotrop;
iv) der Rest Wasser; und
v) optional ein organisches Lösungsmittel;
wobei das wenigstens eine kationische Tensid ein kationisches Tensid der folgenden Strukturformel umfasst: 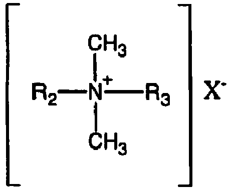 wobei R₂ und R₃ gleich oder unterschiedlich C₈-C₁₂ Alkyl sind oder R₂ C₁₂₋₁₆ Alkyl, C₈₋₁₈ Alkylethoxy, C₈₋₁₈ Alkylphenolethoxy ist und R₃ Benzyl ist und X ein Halogenid oder ein Methosulfatanion ist,
und danach
Spülen und Trocknen der Polyethylenterephthalatflocken.

9. Verfahren nach Anspruch 8, wobei das Alkalihydroxid Natriumhydroxid umfasst.

10. Verfahren nach Anspruch 8, wobei die Waschlösung 0,5 bis 2,0 Gew.-% des Alkalihydroxids umfasst.

11. Verfahren nach Anspruch 8, wobei die Waschlösung 1 bis 3 Gramm/Liter des Additivs umfasst.

12. Verfahren nach Anspruch 8, wobei der Waschschritt auf einer Temperatur zwischen 60 und 90°C durchgeführt wird.

13. Verfahren nach Anspruch 8, wobei das Additiv ein organisches Lösungsmittel umfasst, ausgewählt aus der Gruppe bestehend aus Ethylenglykolmonomethylether, Ethylenglykolmonoethylether, Ethylenglykolmonopropylether, Ethylenglykolmonoisopropylether, Ethylenglykolmonobutylether, Ethylenglykolmonophenylether, Ethylenglykolmonobenzylether, Diethylenglykolmonomethylether, Diethylenglykolmonoethylether, Diethylenglykol-mono-n-butylether, Ethylenglykoldimethylether, Ethylenglykoldiethylether, Ethylenglykoldibutylether und Kombination von einem oder mehreren der Obigen, wobei das organische Lösungsmittel optional Diethylenglykol-mono-n-butylether umfasst.

14. Verfahren nach Anspruch 8, wobei das wenigstens eine kationische Tensid Dioctyldimethylammoniumchlorid umfasst.

## Revendications

1. Solution de lavage d'un téréphtalate de polyéthylène recyclé, la solution de lavage comprenant :
a) de l'hydroxyde de sodium ; et
b) une quantité efficace d'un additif comprenant :
a) au moins un tensioactif non ionique ;
b) au moins un tensioactif cationique ;
c) un hydrotrope ;
d) de l'eau (q.s.p.) ; et
e) en option un solvant organique
où le au moins un tensioactif cationique comprend un tensioactif cationique ayant la formule développée suivante : 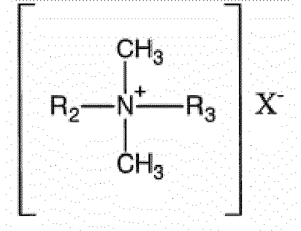 où R₂ et R₃ représentent le même alkyle en C₈₋₁₂ ou des alkyles en C₈₋₁₂ différents, ou R₂ représente un alkyle en C₁₂₋₁₆, un (alkyle en C₈₋₁₈)éthoxy ou un (alkyle en C₈₋₁₈)phénoléthoxy et R₃ représente un benzyle, et X représente un halogénure ou un anion méthosulfate.

2. Solution de lavage selon la revendication 1, où l'additif comprend un solvant organique sélectionné dans le groupe consistant en les suivants : éther monométhylique de l'éthylène glycol, éther monoéthylique de l'éthylène glycol, éther monopropylique de l'éthylène glycol, éther monoisopropylique de l'éthylène glycol, éther monobutylique de l'éthylène glycol, éther monophénylique de l'éthylène glycol, éther monobenzylique de l'éthylène glycol, éther monométhylique du diéthylène glycol, éther monoéthylique du diéthylène glycol, éther mono-*n*-butylique du diéthylène glycol, éther diméthylique de l'éthylène glycol, éther diéthylique de l'éthylène glycol, éther dibutylique de l'éthylène glycol et combinaisons de un ou plusieurs de ceux-ci, le solvant organique comprenant en option l'éther mono-*n*-butylique du diéthylène glycol.

3. Solution de lavage selon la revendication 1, où le au moins un tensioactif non ionique comprend l'éthoxylate d'un alcool ou l'alkoxylate d'un alcool.

4. Solution de lavage selon la revendication 1, où la concentration dans l'additif du au moins un tensioactif non ionique rapportée au poids total de l'additif est dans la plage de 45 à 65 % en poids.

5. Solution de lavage selon la revendication 1, où le au moins un tensioactif non ionique comprend un alcool gras éthoxylé et un alcool gras éthoxylé/propoxylé, en option où l'additif comprend l'alcool gras éthoxylé et l'alcool gras éthoxylé/propoxylé à des quantités rapportées au poids total de l'additif de 45-55 % en poids et de 4-10 % en poids, respectivement.

6. Solution de lavage selon la revendication 1, où le au moins un tensioactif cationique comprend le chlorure de diméthyldioctylammonium.

7. Solution de lavage selon la revendication 1, où l'hydrotrope est sélectionné dans le groupe consistant en les suivants : sulfonates de benzène, sulfonates de naphtalène, sulfonates d'alkylbenzène à chaîne courte (C₁₋₁₁), sulfonates d'alkylbenzène à chaîne moyenne (C₆₋₁₁), alkylpolyglucosides, oxydes d'alkyldiméthylamine à chaîne moyenne (C₆₋₁₀), disulfonates d'alkyldiphényloxyde, forme hydrotrope d'un ester de phosphate, sulfates d'alkyléther à chaîne moyenne (C₆₋₁₁) et combinaisons de un ou plusieurs de ceux-ci, l'hydrotrope comprenant en option le sulfonate sodique de cumène.

8. Procédé de recyclage de déchets de téréphtalate de polyéthylène, le procédé incluant les étapes de triage des déchets de téréphtalate de polyéthylène pour éliminer les autres matériaux, de granulation ou de broyage des déchets de téréphtalate de polyéthylène pour produire des paillettes de téréphtalate de polyéthylène et de lavage des paillettes de téréphtalate de polyéthylène pour éliminer les contaminants, l'étape de lavage comprenant les étapes consistant à :
mettre en contact les paillettes de téréphtalate de polyéthylène avec une solution de lavage comprenant :
a) un hydroxyde alcalin ; et
b) une quantité efficace d'un additif comprenant :
i) au moins un tensioactif non ionique ;
ii) au moins un tensioactif cationique ;
iii) un hydrotrope ;
iv) de l'eau (q.s.p.) ; et
v) en option un solvant organique ;
où le au moins un tensioactif cationique comprend un tensioactif cationique ayant la formule développée suivante : 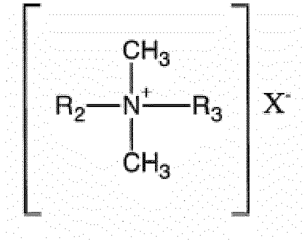 où R₂ et R₃ représentent le même alkyle en C₈₋₁₂ ou des alkyles en C₈₋₁₂ différents, ou R₂ représente un alkyle en C₁₂₋₁₆, un (alkyle en C₈₋₁₈)éthoxy ou un (alkyle en C₈₋₁₈)phénoléthoxy et R₃ représente un benzyle, et X représente un halogénure ou un anion méthosulfate.
et ensuite
rincer et sécher les paillettes de téréphtalate de polyéthylène.

9. Procédé selon la revendication 8, où l'hydroxyde alcalin comprend l'hydroxyde de sodium.

10. Procédé selon la revendication 8, où la solution de lavage comprend de 0,5 à 2,0 % en poids de l'hydroxyde alcalin.

11. Procédé selon la revendication 8, où la solution de lavage comprend de 1 à 3 grammes/litre de l'additif.

12. Procédé selon la revendication 8, où l'étape de lavage est effectuée à une température entre 60 et 90 °C.

13. Procédé selon la revendication 8, où l'additif comprend un solvant organique sélectionné dans le groupe consistant en les suivants : éther monométhylique de l'éthylène glycol, éther monoéthylique de l'éthylène glycol, éther monopropylique de l'éthylène glycol, éther monoisopropylique de l'éthylène glycol, éther monobutylique de l'éthylène glycol, éther monophénylique de l'éthylène glycol, éther monobenzylique de l'éthylène glycol, éther monométhylique du diéthylène glycol, éther monoéthylique du diéthylène glycol, éther mono-*n*-butylique du diéthylène glycol, éther diméthylique de l'éthylène glycol, éther diéthylique de l'éthylène glycol, éther dibutylique de l'éthylène glycol et combinaisons de un ou plusieurs de ceux-ci, le solvant organique comprenant en option l'éther mono-*n*-butylique du diéthylène glycol.

14. Procédé selon la revendication 8, où le au moins un tensioactif cationique comprend le chlorure de diméthyldioctylammonium.
